# EUROPEAN PATENT APPLICATION

(11) **EP 4 742 082 A1**
(43) Date of publication of application: **13.05.2026**
(21) Application number: 25214246.8
(22) Date of filing: 07.11.2025
(51) Int. Cl.: G06F 40/174, G06F 40/166, G06F 40/197

(54) **WEB FORM AUGMENTATION**

(30) Priority: 08.11.2024 US 202418941617
(71) Applicant: ADP, Inc., Roseland, NJ 07068 (US)
(72) Inventor: SARAVANAN, Hari Rama Chandran, Roseland, 07068 (US); BASKARAN, Naveen, Roseland, 07068 (US); KUMAR, Saravana, Roseland, 07068 (US)
(74) Representative: Morrall, Jonathan Ian McLachlan

(57) **Abstract**

A system can include one or more memory devices that can store instructions thereon that, when executed by one or more processors, cause the one or more processors to receive a selection to indicate a request for a form for display via a user interface. The retrieved form can have a first format. The system can detect that the form is associated with several fields. Further, the system can transmit an Application Programming Interface (API) call to retrieve metadata to identify the fields to be included in the form. Based on the existing fields, and those identified from the retrieved metadata, the system can modify the form to have a second format, and display the form having the second format.

## Description

### TECHNICAL FIELD

This application is generally related to computing technology, and, more particularly, to data manipulation.

### BACKGROUND

A computing system can include a user interface to display forms having one or more fields.

### SUMMARY

Aspects of some technical solutions described herein are directed to a data retrieval architecture for augmenting digital content. For example, aspects of the technical solution can retrieve a static web form, which includes one or more default fields, and augment one or more additional fields to the web form. Given that web forms for a given entity or source can often include overlapping fields (e.g., a first web form and a second web form both include the same field), it can be technically challenging for a system to efficiently store the web forms. For example, when a system records or stores a first web form and a second web form, which both include the same field, information that represents the same field is stored or record twice (e.g., duplicative). Aspects of the technical solutions can manage duplicative storage by maintaining a static page (e.g., a default page, a boilerplate page, etc.) that represents fields that are often included in multiple web page forms. Advantageously, the static page is only recorded or stored in memory once. The static page can be augmented with additionally fields or information based on a context associated with a given presentation of the static page.

The data retrieval architecture of the technical solutions described herein can provide a flexible computational approach to data presentation as web page forms can be render on demand instead of storing each possible combination of fields for the web page forms. Additionally, the fields of the web page forms can be stored as individually retrievable structures such that one or more fields may be separately retrieved. The data retrieval architecture can reduce the amount of resources consumed in storing web page forms as the amount of information (e.g., the number of bits, the number of bytes, etc.) to record the web page forms is often larger than the amount of information that represents each field. For example, when a web page form is stored, that includes multiple fields, location information about the fields (e.g., where to place a field, etc.) is included in the information that represents the web page field. By storing fields separately from web page forms, the information that corresponds to location of fields within the web page forms can be omitted. The field location can be specified during subsequent rendering of the web page forms.

At least one aspect is directed to a system. The system can include one or more memory devices. The one or more memory devices can store instructions thereon. The instructions can, when executed by one or more processors, cause the one or more processors to receive, via a user interface, a selection to indicate a request for a form for display. The instructions can cause the one or more processors to retrieve the form responsive to receipt of the selection. The form can have a first format and the first format can include a first set of fields for display. The instructions can cause the one or more processors to detect, responsive to retrieval of the form, based on one or more characteristics of the form, that the form is associated with a second set of fields. The second set of fields can be absent from the first format. The instructions can cause the one or more processors to transmit, responsive to detection of the association between the form and the second set of fields, an Application Programming Interface (API) call to retrieve metadata to identify the second set of fields for inclusion in the form. The instructions can cause the one or more processors to modify, responsive to receipt of the metadata, the form to have a second format. The second format can include the first set of fields and the second set of fields. The instructions can cause the one or more processors to display, responsive to modification of the form, the form modified to include the first set of fields and the second set of fields.

At least one aspect is directed to a method. The method can include receiving, by one or more processing circuits, via a user interface, a selection to indicate a request for a form for display. The method can include retrieving, by the one or more processing circuits, the form responsive to receipt of the selection. The form can have a first format and the first format can include a first set of fields for display. The method can include detecting, by the one or more processing circuits, responsive to retrieval of the form, based on one or more characteristics of the form, that the form is associated with a second set of fields. The second set of fields can be absent from the first format. The method can include transmitting, by the one or more processing circuits, responsive to detection of the association between the form and the second set of fields, an Application Programming Interface (API) call to retrieve metadata to identify the second set of fields for inclusion in the form. The method can include modifying, by the one or more processing circuits, responsive to receipt of the metadata, the form to have a second format. The second format can include the first set of fields and the second set of fields. The method can include displaying, by the one or more processing circuits, responsive to modification of the form, the form modified to include the first set of fields and the second set of fields.

At least one aspect is directed to a non-transitory computer readable medium including one or more instructions stored thereon and executable by a processor. The processor can receive, via a user interface, a selection to indicate a request for a form for display. The processor can retrieve the form responsive to receipt of the selection. The form can have a first format and the first format can include a first set of fields for display. The processor can detect, responsive to retrieval of the form, based on one or more characteristics of the form, that the form is associated with a second set of fields. The second set of fields can be absent from the first format. The processor can transmit, responsive to detection of the association between the form and the second set of fields, an Application Programming Interface (API) call to retrieve metadata to identify the second set of fields for inclusion in the form. The processor can modify, responsive to receipt of the metadata, the form to have a second format. The second format can include the first set of fields and the second set of fields. The processor can display, responsive to modification of the form, the form modified to include the first set of fields and the second set of fields.

### BRIEF DESCRIPTION OF THE FIGURES

These and other aspects and features of the present implementations are depicted by way of example in the figures discussed herein. Present implementations can be directed to, but are not limited to, examples depicted in the figures discussed herein. Thus, this disclosure is not limited to any figure or portion thereof depicted or referenced herein, or any aspect described herein with respect to any figures depicted or referenced herein.
FIG. 1 depicts an example system, according to this disclosure.
FIG. 2 depicts an example computer architecture, according to this disclosure.
FIG. 3 depicts an example static form, according to this disclosure.
FIG. 4 depicts an example dynamic section for inclusion in a static form, according to this disclosure.
FIG. 5 depicts an example form augmented with one or more dynamic fields, according to this disclosure.
FIG. 6 depicts an example method for augmenting static forms with dynamic fields, according to this disclosure.
FIG. 7 depicts a block diagram of an example computing system for implementing the embodiments of the present solution, including, for example, the system depicted in FIG. 1, and the method depicted in FIG. 6.

### DETAILED DESCRIPTION

Aspects of the technical solutions described herein with reference to the figures, which are illustrative examples of this technical solution. The figures and examples below are not meant to limit the scope of the technical solutions to the present implementations or to a single implementation, and other implementations in accordance with present implementations are possible, for example, by way of interchange of some or all of the described or illustrated elements. Where certain elements of the present implementations can be partially or fully implemented using known components, only those portions of such known components that are necessary for an understanding of the present implementations are described, and detailed descriptions of other portions of such known components are omitted to not obscure the present implementations. Terms in the specification and claims are to be ascribed no uncommon or special meaning unless explicitly set forth herein. Further, the technical solutions and the present implementations encompass present and future known equivalents to the known components referred to herein by way of description, illustration, or example.

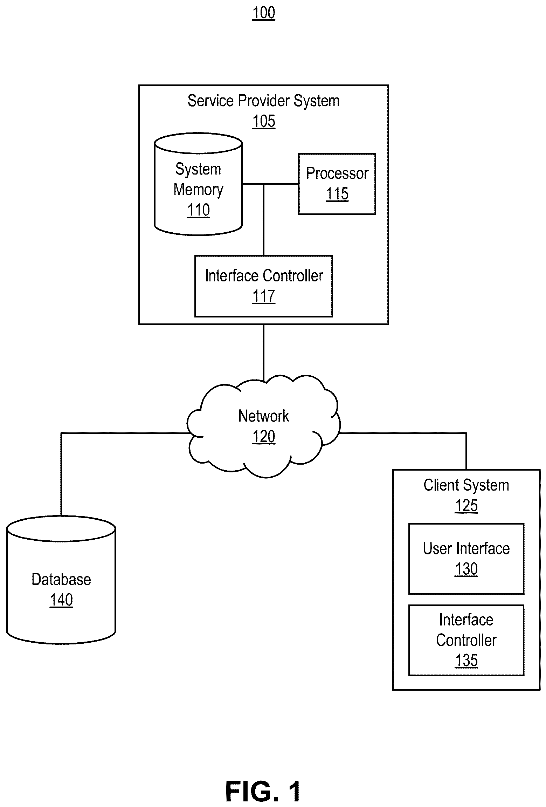

FIG. 1 depicts an example system, according to this disclosure. As illustrated by way of example in FIG. 1, a system 100 can include at least one of a service provider system 105, a network 120, a client system 125, and a database 140. In an aspect, the system 100 according to an architecture as discussed herein can provide a combination of information retrieval, object retrieval, web form augmentation, and web form display.

The network 120 can include any type or form of network. The geographical scope of the network 120 can vary widely and the network 120 can include a body area network (BAN), a personal area network (PAN), a local-area network (LAN), e.g., Intranet, a metropolitan area network (MAN), a wide area network (WAN), or the Internet. The topology of the network 120 can be of any form and can include, e.g., any of the following: point-to-point, bus, star, ring, mesh, or tree. The network 120 can include an overlay network which is virtual and sits on top of one or more layers of other networks 120. The network 120 can be of any such network topology as known to those ordinarily skilled in the art capable of supporting the operations described herein. The network 120 can utilize different techniques and layers or stacks of protocols, including, e.g., the Ethernet protocol, the Internet protocol suite (TCP/IP), the ATM (Asynchronous Transfer Mode) technique, the SONET (Synchronous Optical Networking) protocol, or the SD (Synchronous Digital Hierarchy) protocol. The TCP/IP Internet protocol suite can include application layer, transport layer, Internet layer (including, e.g., IPv6), or the link layer. The network 120 can include a type of a broadcast network, a telecommunications network, a data communication network, or a computer network.

The service provider system 105 can include a physical computer system that is or may be operatively coupled with one or more components of the system 100. The service provider system 105 can include a virtual computing system, an operating system, and a communication bus to effect communication and processing. The service provider system 105 can include a system memory 110, a processor 115, and an interface controller 117.

The processor 115 can execute one or more instructions associated with the service provider system 105. The processor 115 can include an electronic processor, an integrated circuit, or the like including one or more of digital logic, analog logic, digital sensors, analog sensors, communication buses, volatile memory, nonvolatile memory, and the like. The processor 115 can include, but is not limited to, at least one microcontroller unit (MCU), microprocessor unit (MPU), central processing unit (CPU), graphics processing unit (GPU), physics processing unit (PPU), embedded controller (EC), or the like. The processor 115 can include a memory operable to store one or more instructions for operating components of the processor 115 and operating components operably coupled to the processor 115. For example, the one or more instructions can include one or more of firmware, software, hardware, operating systems, embedded operating systems. The processor 115 or the service provider system 105 generally can include one or more communication bus controllers to effect communication between the processor 115 and the other elements of the service provider system 105.

The interface controller 117 can link the service provider system 105 with one or more of the network 120 and the client system 125, by one or more communication interfaces. A communication interface can include, for example, an application programming interface ("API") compatible with a particular component of the service provider system 105, or the client system 125. The communication interface can provide a particular communication protocol compatible with a particular component of the service provider system 105 and a particular component of the client system 125. The interface controller 117 can be compatible with particular content objects and can be compatible with particular content delivery systems corresponding to particular content objects, structures of data, types of data, or any combination thereof. For example, the interface controller 117 can be compatible with transmission of text data or binary data structured according to one or more metrics or data of the client system 125.

One or more components of the system 100 can include or utilize one or more models trained with machine learning. For example, the service provider system 105 can execute or implement models trained using machine learning techniques, models trained with the same or different types of training data, or models trained or configured to receive different types of input or provide different types of output. Example machine learning techniques can include neural networks, such as a generative adversarial network (e.g., a generator neural network and a discriminator neural network that are trained simultaneously through adversarial training), a variational autoencoder (e.g., an autoencoder neural network that learns to generate new data samples by modeling the underlying probability distribution of the data), an autoregressive model, or other types of neural networks (e.g., deep learning models, convolution neural networks, recurrent neural networks, or transformers). Transformers can refer to or include a type of deep learning model architecture configured for natural language processing, including, for example, bidirectional encoder representations ("BERT"), generative pre-trained transformers, text-to-text transformer, transformer-XL, robustly optimized BERT, or distilled BERT. Other types of machine learning techniques can include supervised learning models, unsupervised learning models, semi-supervised learning models, or reinforcement learning models. For example, a supervised machine learning technique can include a support vector machine used for classification and regression tasks. Given a set of labeled training data, a support vector machine can identify the hyperplane that separates the data into classes with the largest possible margin (e.g., distance between the hyperplane and nearest data points from each class).

The system memory 110 can store data associated with the system 100. The system memory 110 can include one or more hardware memory devices to store binary data, digital data, or the like. The system memory 110 can include one or more electrical components, electronic components, programmable electronic components, reprogrammable electronic components, integrated circuits, semiconductor devices, flip flops, arithmetic units, or the like. The system memory 110 can include at least one of a non-volatile memory device, a solid-state memory device, a flash memory device, or a NAND memory device. The system memory 110 can include one or more addressable memory regions disposed on one or more physical memory arrays. A physical memory array can include a NAND gate array disposed on, for example, at least one of a particular semiconductor device, integrated circuit device, and printed circuit board device.

The client system 125 can include a computing system associated with a database system. For example, the client system 125 can correspond to a cloud system, a server, a distributed remote system, or any combination thereof. For example, the client system 125 can include an operating system to execute a virtual environment. The operating system can include hardware control instructions and program execution instructions. The operating system can include a high-level operating system, a server operating system, an embedded operating system, or a boot loader. The client system 125 can include a user interface 130 and an interface controller 135.

The user interface 130 can include one or more devices to receive input from a user or to provide output to a user. For example, the user interface 130 can correspond to a display device to provide visual output to a user and one or more or user input devices to receive input from a user. For example, the input devices can include a keyboard, mouse or touch-sensitive panel of the display device, but are not limited thereto. The display device can display at least one or more presentations as discussed herein, and can include an electronic display. An electronic display can include, for example, a liquid crystal display (LCD), a light-emitting diode (LED) display, an organic light-emitting diode (OLED) display, or the like. The display device can receive, for example, capacitive or resistive touch input. The display device can be housed at least partially within the client system 125.

The interface controller 135 can link the client system 125 with one or more of the network 120 and the service provider system 105, by one or more communication interfaces. A communication interface can include, for example, an application programming interface ("API") compatible with a particular component of the service provider system 105, or the client system 125. The communication interface can provide a particular communication protocol compatible with a particular component of the service provider system 105 and a particular component of the client system 125. The interface controller 135 can be compatible with particular content objects and can be compatible with particular content delivery systems corresponding to particular content objects, structures of data, types of data, or any combination thereof. For example, the interface controller 135 can be compatible with transmission of text data or binary data structured according to one or more metrics or data of the service provider system 105.

The database 140 can store, maintain, or keep one or more data structures. For example, the database 140 can store information as one or more vectors. As another example, the database 140 can include one or more physical rows or virtual rows of memory for which one or more sets of information can be stored. The database 140 can store data structures that represent or include one or more web forms. For example, the database 140 can store a first web form (e.g., a form) as a first data structure in memory. As another example, the database 140 can store the contents (e.g., fields) of the form as the first data structure. The database 140 can store one or forms having various formats. For example, the database 140 can store a static form or a static page (e.g., the form includes one or more default or predetermined fields. The default fields may include fields such as, name, address, title, description, experience, etc. The default fields can refer to or include fields that routinely or ordinarily are included in different web forms. Stated otherwise, even though a first form and a second form can have different context, the first form and the second form both routinely include one or more default fields.

The database 140 can store one or more dynamic fields as data structures. The dynamic fields can refer to or include fields that can be ingested into or augmented into a static page. For example, a dynamic field can include fields such as, quantity, delivery date, start date, frequency, labels, etc. The dynamic fields can represent fields that are included in one or more forms or pages having given context. For example, a product order form can include default fields such as date of order and name of company. Additionally, the product order form can be augmented with one or more dynamic fields tagged as corresponding to order forms.

The service provider system 105 can cause the display or presentation of one or more graphical user interfaces. For example, the service provider system 105 can transmit signals to the client system 125 that cause the client system 125 to present, via a display, a graphical user interface. As another example, the service provider system 105 can control execution of a mobile application, stored by or on the client system 125, such that the mobile application causes the client system 125 to provide a graphical user interface.

The service provider system 105 can receive one or more selections. For example, the service provider system 105 can receive selections via the user interface 130. As another example, the service provider system 105 can receive information that indicates one or more selections that were received via a user interface. The service provider system 105 can receive selections that indicate one or more requests. For example, a first selection can indicate a request for one or more web forms. Stated otherwise, a selection can indicate a request to display or present a web form.

The service provider system 105 can receive the selections during one or more chatbot sessions. For example, the service provider system 105 can receive or provide information to the client system 125 while operating a chatbot session. The service provider system 105 can receive the selections as one or more natural language prompts. As another example, the service provider system 105 can receive the selections via one or more interactions with elements of a user interface. The elements can include items such as checkboxes, toggles, text boxes, etc.

The service provider system 105 can retrieve one or more forms. For example, the service provider system 105 can transmit one or more API calls, to the database 140, to retrieve web forms from the database 140. As another example, the service provider system 105 can retrieve web forms, from the database 140, via one or more direct memory accesses. The service provider system 105 can retrieve forms that include one or more formats. For example, the service provider system 105 can retrieve a form that includes a first format. The first format can refer to or represent a static form or default form. Stated otherwise, the first format can represent web forms including one or more predetermined fields.

The service provider system 105 can detect associations between forms and fields. For example, the service provider system 105 can detect that a first form is associated with one or more dynamic fields. As another example, the service provider system 105 can detect that one or more fields are flagged as corresponding to one or more forms. The service provider system 105 can detect associations based on a context of the forms. For example, the service provider system 105 can extract, from the selection of a form, information that represents or indicates a context of the form (e.g., how the form is going to be used, what information will be collected for inclusion in the form, etc.). Additionally, or alternatively, the service provider system 105 can prompt the client system 125 for information that identifies the context of the form. For example, the service provider system 105 can prompt the client system 125 to provide an input that includes the context of the form.

The service provider system 105 can detect that a form, retrieved from the database 140, is associated with one or more fields that are absent from default fields. For example, the service provider system 105 can detect that a form is associated with one or more fields other than the fields included in the form that was retrieved from the database 140. As another example, the service provider system 105 can detect that a form is associated with one or more fields based on tags applied to the form.

The service provider system 105 can transmit one or more signals to an external system to retrieve metadata associated with the form. For example, the service provider system 105 can transmit one or more API calls to a system separate to the service provider system 105. The system can return information (e.g., metadata) that indicates locations or placements of dynamic fields within the form. The service provider system 105 can transmit the API calls with one or more tags to identify a given form. For example, each form stored in the database 140 may include a tag that identifies one or more aspects about the form. The service provider system 105 can transmit information corresponding to the form to cause the external system to return metadata the pertains to the tag or the form.

The service provider system 105 can modify one or more aspects of the form. For example, the service provider system 105 can ingest one or more dynamic fields into the form. As another example, the service provider system 105 can adjust or change the placement of one or more fields within the form. The service provider system 105 can modify the form to have a second format. For example, the service provider system 105 can modify the form, relative to the first format, such that the form has one or more characteristics that are different than the first format. The service provider system 105 can modify form by removing, adding, relocating, reposition, changing, or otherwise altering one or more fields within the form. For example, the service provider system 105 can augment a dynamic field into the form. As another example, the service provider system 105 can change the location of a field, relative to a location of the field when the form was retrieved from memory.

The service provider system 105 can display or otherwise present the form. For example, the service provider system 105 can transmit the form, to the client system 125, such that the client system 125 displays the form. As another example, the service provider system 105 can provide a webpage address, which when accessed, causes the form to be displayed.

The service provider system 105 can identify placements for one or more fields within the form. For example, the service provider system 105 can extract location information from the metadata. As another example, the metadata can include links between placements of fields within the form. The links can indicate that a given field is to be placed in a given location with the form. The service provider system 105 can identify placements for each field by querying the metadata using a field identifier for each field. The service provider system 105 can modify the form to include one or more dynamic fields by placing the dynamic fields within the form in accordance with the metadata.

The service provider system 105 can display one or more versions of the form. For example, the service provider system 105 can display a first version of the form that includes information previously provided to the service provider system 105. The first version can include information that was entered into one or more fields of the form. For example, the first version of the form can represent a previously worked on version (e.g., some information had been entered into the form). As another example, the first version of the form can represent information that the service provider system 105 automatically populated into the form. For example, the service provider system 105 can automatically populated information that was retrieved from an account.

The service provider system 105 can update the form such that the form includes a second or subsequent version. For example, the service provider system 105 can augment the form with additional dynamic fields such that additional information, received from the client system 125, can be populated into or entered into the form. The service provider system 105 can display the form as a sample or mock rendering. For example, the service provider system 105 can display an augmented version of the form. The service provider system 105 can prompt the client system 125 to provide feedback regarding the augmentation of the form. For example, the service provider system 105 can prompt the client system 125 to provide feedback regarding the placement of one or more dynamic fields in the form. As another example, the service provider system 105 can prompt the client system 125 to provide feedback regarding whether the number of dynamic fields augmented into the form was accurate.

The service provider system 105 can update the form based on feedback provided by the client system 125. For example, the service provider system 105 can change a location of a dynamic field, within the form, based on feedback provided by the client system 125. As another example, the service provider system 105 can remove one or more dynamic fields from the form. The service provider system 105 can add one or more dynamic fields to the form based on feedback provided by the client system 125.

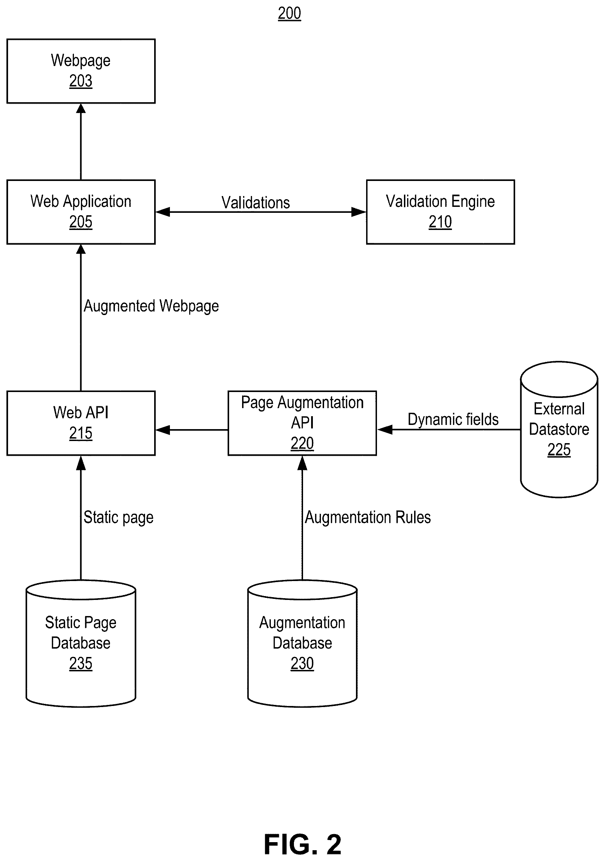

FIG. 2 depicts an example computer execution architecture, according to this disclosure. As illustrated by way of example in FIG. 2, a computer execution architecture 200 can be one or more instructions stored at the system memory 110 to cause one or more components of the system 100, the service provider system 105, the client system 125, or any combination thereof, but is not limited thereto, to carry out one or more actions. For example, the computer execution architecture 200 can include computational hardware or software integrated with the service provider system 105. The computer execution architecture 200 can refer to or illustrate communication between one or more separate or discrete systems.

The computer execution architecture 200 can include one or more of a webpage 203, a web application 205, a validation engine 210, a web API 215, a page augmentation API 220, an external datastore 225, an augmentation database 230, or a static page database 235. The system 100 or one or more components thereof can represent or include one or more components of the computer execution architecture 200. For example, the database 140 can represent the augmentation database 230 and the static page database 235. As another example, the service provider system 105 can implement or call the web API 215 and the page augmentation API 220. The external datastore 225 can include at least one external system to that of the service provider system 105.

The external datastore 225 can obtain information from one or more sources. For example, the external datastore 225 can receive information from the client system 125. As another example, the external datastore 225 can receive information from at least one of websites, online resources, digital resources, open source networks, or collection entities. The external datastore 225 can obtain information in one or more formats. For example, the external datastore 225 can obtain information as one or more data strings. As another example, the external datastore 225 can obtain information as tokenized values. The external datastore 225 can modify the information into a standard format or default format. For example, the external datastore 225 can modify the information into a form that is understood by the service provider system 105. The information, obtained by the external datastore 225, can include the metadate described herein. For example, the external datastore 225 can obtain information that indicates placements of dynamic fields within one or more static pages.

The external datastore 225 can associate one or more fields with corresponding fields by applying one or more tags to the metadata. For example, the external datastore 225 can ingest an identifier of a given field into one or more segments of metadata that correspond to the given field. The ingestion of the identifier can indicate that the segments of the metadata are associated with the given field. Stated otherwise, evaluation of the segments of the metadata would trigger a detection that the segments of the metadata correspond to the given field.

The page augmentation API 220 can transmit one or more API messages to the external datastore 225. For example, the page augmentation API 220 can transmit an API request that includes an identifier of one or more dynamic fields. The page augmentation API 220 can transmit the API messages to cause the external datastore 225 to provide data strings that correspond to the requested fields. For example, the external datastore 225 can transmit computer code that represents the requested fields. As another example, the external datastore 225 can provide metadata associated with one or more requested forms.

The page augmentation API 220 can collect one or more dynamic fields for inclusion in a form. For example, the web API 215 can provide a form identifier to the page augmentation API 220 such that the page augmentation API 220 retrieves one or more fields associated with an underlying form. The page augmentation API 220 can retrieve on or more augmentation rules from the augmentation database 230. For example, the page augmentation API 220 can retrieve information that dictates how one or more fields can be concatenated or linked with one another. As another example, the page augmentation API 220 can retrieve information that dictates how to relocate or reposition one or more fields within the form. The page augmentation API 220 can forward the dynamic fields and the augmentation rules to the web API 215.

The web API 215 can retrieve one or more static pages (e.g., forms, static forms, etc.) from the static page database 235. For example, the web API 215 can retrieve a static page that includes one or more default fields or predetermined fields. As another example, the web API 215 can retrieve a static form that corresponds to the identifier used by the page augmentation API 220 to retrieve dynamic fields. The web API 215 can augment or ingest, based on the augmentation rules, the dynamic fields into the static page. For example, the web API 215 can add the dynamic fields into the static page. As another example, the web API 215 can adjust a placement of one or more fields within the static page.

The web API 215 can provide the augmented form (e.g., an augmented webpage) to the web application 205. The web application 205 can communicate with the validation engine 210 to validate the augmented webpage. For example, the web application 205 can confirm that the placement of the fields within the augmented webpage is in alignment with corresponding metadata. As another example, the web application 205 can confirm that every field flagged to receive automatic population of information has been populated with information.

The web application 205 can modify or otherwise adjust the augmented webpage based on communication with the validation engine 210. For example, the web application 205 can receive one or more validations regarding the augmented webpage (e.g., which portions, segments, or fields are correct). The web application 205 can modify any portion of the augmented webpage for which the validation engine 210 did not validate.

The web application 205 can cause the webpage 203 (e.g., validated augmented webpage) to be displayed. For example, the web application 205 can be stored on the client system 125. The web application 205, when executed by the client system 125, can cause the user interface 130 to display or otherwise present the webpage 203. As another example, the web application 205 can be displayed upon arriving at the corresponding website (e.g., Uniform Resource Locator, etc.).

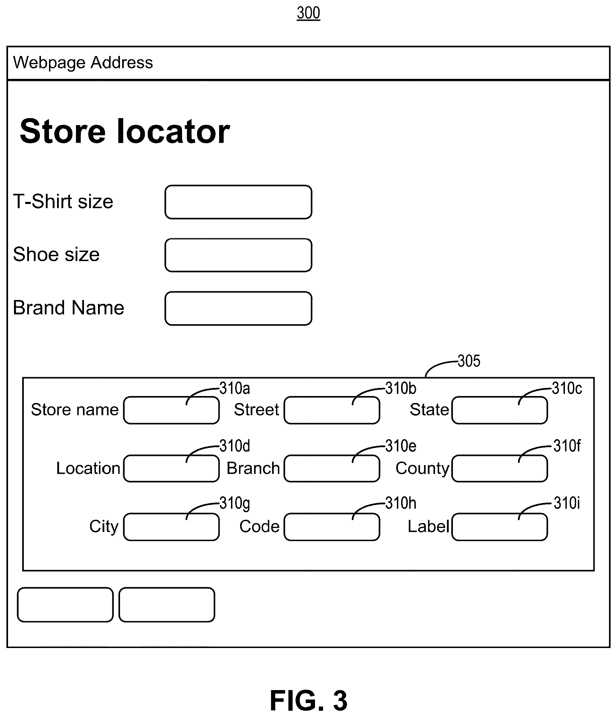

FIG. 3 depicts an example static form 300, according to this disclosure. The static form 300 can represent an appearance or the content of the static form 300 prior to augmentation. For example, the static form 300 includes one or more default fields or static sections. The static form 300 includes a section 305. The section 305 can refer to or include a portion or segment of the static form 300 that includes one or more static fields 310. As shown in FIG. 3, the static form 300 includes static fields 310a, 310b, 310c, 310d, 310e, 310f, 310g, 310h, and 310i. Each of the static fields 310 can pertain to or represent at least one of an input field or an output field. For example, a location may be entered into or input into the static field 310d.

The static form 300 can be presented or otherwise displayed. For example, the user interface 170 can display the static form 300. The static fields 310 can represent fields that are associated with one or more forms (e.g., default fields). For example, the static fields 310 can represent fields that are included in a first static form 300 and a second static form 300. As another example, the static fields 310 can represent fields that are often included in forms having difference contexts.

As shown in FIG. 3, the static fields 310 have given locations or placements within the section 305 or the static form 300. The placement of the static fields 310 can include a first placement. The first placement can refer to placement of fields prior to augmentation. Stated otherwise, the placement of the static fields 310 can include a static or default placement. The placement of one or more of the static fields 310 can change as a result of augmentation. For example, an augmented field or dynamic field can be placed or positioned between the static field 310a and the static field 310b. In this example, the static field 310b has been augmented or moved by the placement of the dynamic field. As another example, one or more of the static fields 310 may be linked or otherwise grouped. Stated otherwise, a first static field 310 can be constructed such that the first static field 310 is always placed in front of, before, after, behind, next to, or otherwise adjacent to a second static field 310. In this example, augmentation or adjusting the placement of the second static field 310 can cause the placement of the first static field 310, with the section 305, to also be adjusted.

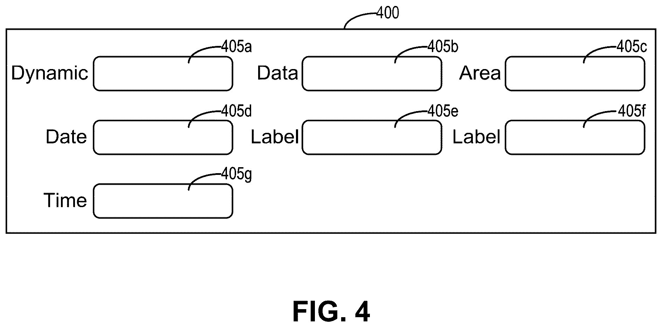

FIG. 4 depicts an example one or more dynamic fields 405, according to this disclosure. The dynamic fields 405 can include one or more fields that can be augmented to or otherwise added to a static form. For example, the dynamic fields 405 can be augmented into the static form 300. The augmentation of the dynamic fields 405 can result in the static form 300 becoming an augmented form or an augmented webpage. For example, the web API 215 can augment the dynamic fields 405 into the static form 300 to generate or create the webpage 203. As another example, the service provider system 105 can augment or otherwise place the dynamic fields 405 within the section 305.

As shown in FIG. 4, the dynamic fields 405 are included in a section 400. The section 400 can refer to or include a data structure that maintains or stores the dynamic fields 405. For example, the section 400 can represent how the dynamic fields 405 are stored in the database 140. The section 400 can refer to or include an arrangement or a placement of the dynamic fields 405. For example, the section 400 can be augmented into the section 305 such that each of the dynamic fields 405 are placed between one or more of the static fields 310.

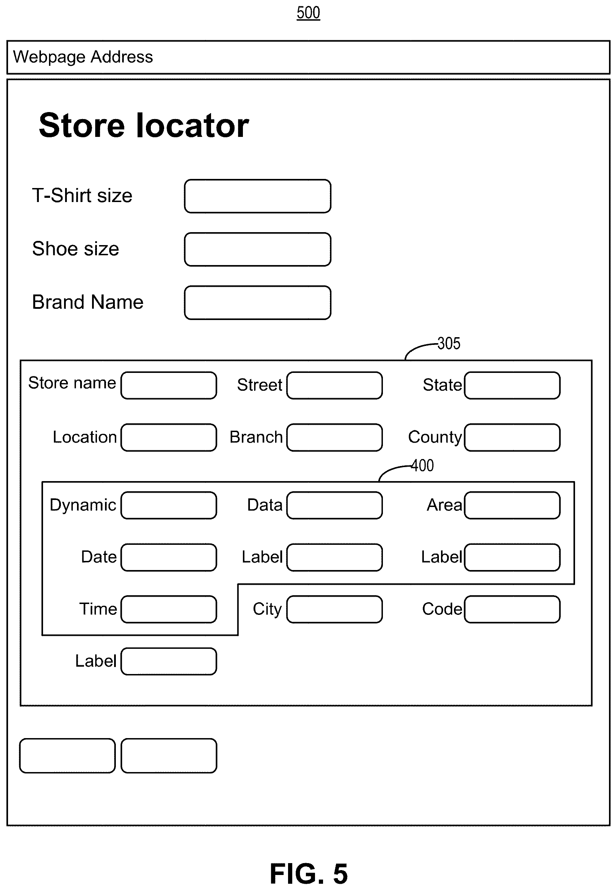

FIG. 5 depicts an example of an augmented form 500, according to this disclosure. The augmented form 500 can refer to or include an example of the static form 300 augmented with the dynamic fields 405. For example, the section 400 is shown to have placed within the section 305. As another example, the augmented form 500 can refer to a web page that has been augmented with one or more additional fields, relative to a static form. While FIG. 5 illustrates an example of the dynamic fields 405 having been augmented into the section 305 as a group, this is for illustrative purposes only and is in no way limiting. For example, dynamic field 405a can be placed between static field 310a and static field 310b. As another example, the placement of the dynamic fields 405, relative to one another, can also be adjusted, modified, or changed.

As shown in FIG. 5, one or more of the static fields 310 have be moved from a first placement (e.g., a placement in static form 300) to a second placement (e.g., a placement in the augmented form 500). Additionally, or alternatively, the placement of one or more of the static fields 310 can be maintained prior to and after augmentation of a static form. For example, the first field of the static form can remain the first field in the augmented form.

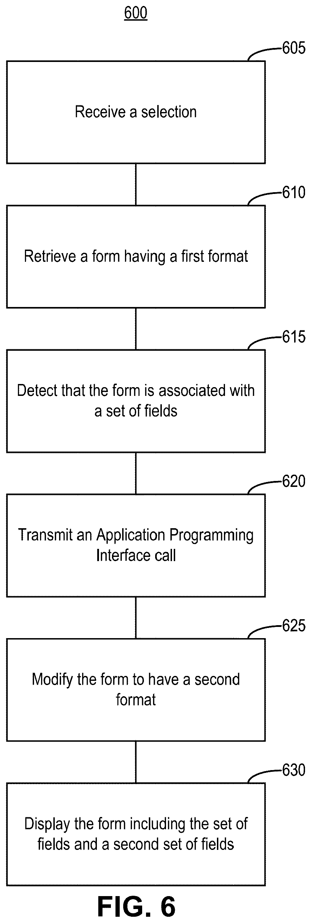

FIG. 6 depicts an example method for augmenting static forms within dynamic fields, according to this disclosure. At least one of the system 100, the service provider system 105, the client system 125, or any combination thereof, or any component thereof, can perform method 600. At 605, the method 600 can receive a selection. For example, the selection can be a selection of a static form. The method 600 can receive the selection via one or more user interfaces. For example, the selection can be received via one or more natural language prompts provided to the user interface. As another example, the selection can be received via one or more input elements of the user interface.

At 610, the method 600 can retrieve a form having a first format. For example, the method 600 can retrieve the form, selected at 605, from a database. The first format of the form can refer to or include a static form. The static form can include a field or a set of fields. For example, the static form can include default fields. As another example, the static form can include a set of predetermined fields.

At 615, the method 600 can detect that the form is associated with a set of fields. For example, the method 600 can detect that the static form is associated with dynamic fields (e.g., a set of fields). Stated otherwise, the method 600 can detect that that static form is linked or otherwise grouped with one or more dynamic fields. The method 600 can detect the association between the static form and the dynamic field based one or tags.

At 620, the method 600 can transmit an Application Programing Interface (API) call. For example, the method 600 can transmit the API call to an external system. The method 600 can receive one or more replies or responses to the API call. For example, the method 600 can receive metadata that corresponds to the static form or the dynamic fields. As another example, the method 600 can receive information that indicates respective placements of the dynamic fields within the static field.

At 625, the method 600 can modify the form to have a second format. For example, the method 600 can augment the dynamic fields into the static form. As another example, the method 600 can adjust or otherwise change the placement or inclusion of one or more fields within the form. The method 600 can modify the form based on the information received responsive to the API call at 620. For example, the method 600 can modify the form based on metadata.

At 630, the method 600 can display the form. The form can include a first set of fields and a second set of fields. For example, the form can include static fields (e.g., a first set of fields) and dynamic fields (e.g., a second set of fields). Stated otherwise, the method 600 can display the form having the second format. The method 600 can display the form via a user interface. For example, the method 600 can cause a display device to display the user interface. As another example, the method 600 can provide a URL to a device that, once visited, causes the form to be displayed.

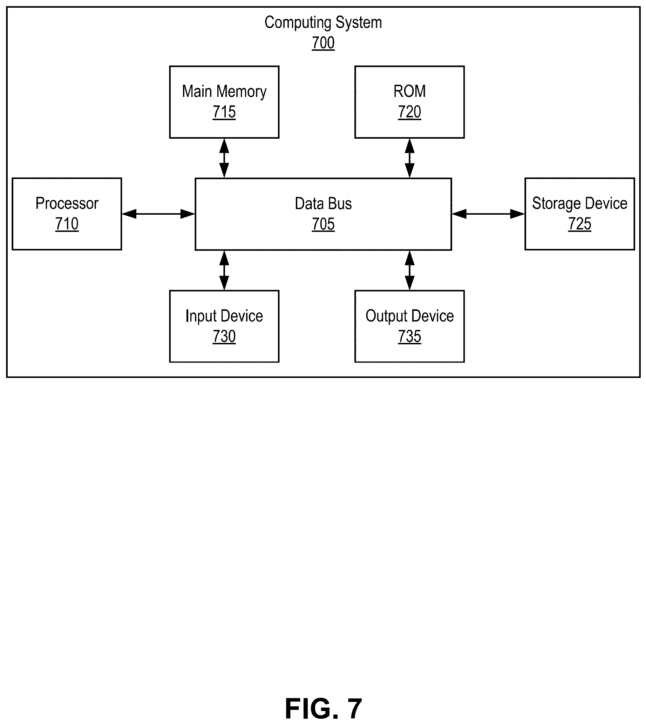

FIG. 7 depicts a block diagram of a computing system 700 for implementing the embodiments of the technical solutions discussed herein, in accordance with various aspects. FIG. 7 illustrates a block diagram of an example computing system 700. Computing system 700 can be used to implement elements of the systems and methods described and illustrated herein. Computing system 700 can be included in and run any device (e.g., a server, a computer, a cloud computing environment or a data processing system).

Computing system 700 can include at least one data bus 705 or other communication device, structure or component for communicating information or data. Computing system 700 can include at least one processor 710 or processing circuit coupled to the data bus 705 for executing instructions or processing data or information. Computing system 700 can include one or more processors 710 or processing circuits coupled to the data bus 705 for exchanging or processing data or information along with other computing systems 700. Computing system 700 can include one or more main memories 715, such as a random access memory (RAM), dynamic RAM (DRAM), cache memory or other dynamic storage device, which can be coupled to the data bus 705 for storing information, data and instructions to be executed by the processor(s) 710. Main memory 715 can be used for storing information (e.g., data, computer code, commands, or instructions) during execution of instructions by the processor(s) 710.

Computing system 700 can include one or more read only memories (ROMs) 720 or other static storage device 725 coupled to the data bus 705 for storing static information and instructions for the processor(s) 710. Storage devices 725 can include any storage device, such as a solid state device, magnetic disk or optical disk, which can be coupled to the data bus 705 to persistently store information and instructions.

Computing system 700 can be coupled via the data bus 705 to one or more output devices 735, such as speakers or displays (e.g., liquid crystal display or active matrix display) for displaying or providing information to a user. Input devices 730, such as keyboards, touch screens or voice interfaces, can be coupled to the data bus 705 for communicating information and commands to the processor(s) 710. Input device 730 can include, for example, a touch screen display (e.g., output device 735). Input device 730 can include a cursor control, such as a mouse, a trackball, or cursor direction keys, for communicating direction information and command selections to the processor(s) 710 for controlling cursor movement on a display.

The processes, systems and methods described herein can be implemented by the computing system 700 in response to the processor 710 executing an arrangement of instructions contained in main memory 715. Such instructions can be read into main memory 715 from another computer-readable medium, such as the storage device 725. Execution of the arrangement of instructions contained in main memory 715 causes the computing system 700 to perform the illustrative processes described herein. One or more processors 710 in a multi-processing arrangement can also be employed to execute the instructions contained in main memory 715. Hard-wired circuitry can be used in place of or in combination with software instructions together with the systems and methods described herein. Systems and methods described herein are not limited to any specific combination of hardware circuitry and software.

Although an example computing system has been described in FIG. 7, the subject matter including the operations described in this specification can be implemented in other types of digital electronic circuitry, or in computer software, firmware, or hardware, including the structures disclosed in this specification and their structural equivalents, or in combinations of one or more of them.

The foregoing examples have been provided merely for the purpose of explanation and are in no way to be construed as limiting of the present disclosure. While aspects of the present disclosure have been described with reference to an exemplary embodiment, it is understood that the words which have been used herein are words of description and illustration, rather than words of limitation. Changes can be made, within the purview of the appended claims, as presently stated and as amended, without departing from the scope and spirit of the present disclosure in its aspects. Although aspects of the present disclosure have been described herein with reference to particular means, materials and embodiments, the present disclosure is not intended to be limited to the particulars disclosed herein; rather, the present disclosure extends to all functionally equivalent structures, methods and uses, such as are within the scope of the appended claims.

The subject matter and the operations described in this specification can be implemented in digital electronic circuitry, or in computer software, firmware, or hardware, including the structures disclosed in this specification and their structural equivalents, or in combinations of one or more of them. The subject matter described in this specification can be implemented as one or more computer programs, e.g., one or more circuits of computer program instructions, encoded on one or more computer storage media for execution by, or to control the operation of, data processing apparatuses. Alternatively, or in addition, the program instructions can be encoded on an artificially generated propagated signal, e.g., a machine-generated electrical, optical, or electromagnetic signal that is generated to encode information for transmission to suitable receiver apparatus for execution by a data processing apparatus. A computer storage medium can be, or be included in, a computer-readable storage device, a computer-readable storage substrate, a random or serial access memory array or device, or a combination of one or more of them. While a computer storage medium is not a propagated signal, a computer storage medium can be a source or destination of computer program instructions encoded in an artificially generated propagated signal. The computer storage medium can also be, or be included in, one or more separate components or media (e.g., multiple CDs, disks, or other storage devices include cloud storage). The operations described in this specification can be implemented as operations performed by a data processing apparatus on data stored on one or more computer-readable storage devices or received from other sources.

The terms "computing device," "component" or "data processing apparatus" or the like encompass various apparatuses, devices, and machines for processing data, including by way of example a programmable processor, a computer, a system on a chip, or multiple ones, or combinations of the foregoing. The apparatus can include special purpose logic circuitry, e.g., an FPGA (field programmable gate array) or an ASIC (application specific integrated circuit). The apparatus can also include, in addition to hardware, code that creates an execution environment for the computer program in question, e.g., code that constitutes processor firmware, a protocol stack, a database management system, an operating system, a cross-platform runtime environment, a virtual machine, or a combination of one or more of them. The apparatus and execution environment can realize various different computing model infrastructures, such as web services, distributed computing and grid computing infrastructures.

A computer program (also known as a program, software, software application, app, script, or code) can be written in any form of programming language, including compiled or interpreted languages, declarative or procedural languages, and can be deployed in any form, including as a stand-alone program or as a module, component, subroutine, object, or other unit suitable for use in a computing environment. A computer program can correspond to a file in a file system. A computer program can be stored in a portion of a file that holds other programs or data (e.g., one or more scripts stored in a markup language document), in a single file dedicated to the program in question, or in multiple coordinated files (e.g., files that store one or more modules, sub programs, or portions of code). A computer program can be deployed to be executed on one computer or on multiple computers that are located at one site or distributed across multiple sites and interconnected by a communication network.

The processes and logic flows described in this specification can be performed by one or more programmable processors executing one or more computer programs to perform actions by operating on input data and generating output. The processes and logic flows can also be performed by, and apparatuses can also be implemented as, special purpose logic circuitry, e.g., an FPGA (field programmable gate array) or an ASIC (application specific integrated circuit). Devices suitable for storing computer program instructions and data can include non-volatile memory, media and memory devices, including by way of example semiconductor memory devices, e.g., EPROM, EEPROM, and flash memory devices; magnetic disks, e.g., internal hard disks or removable disks; magneto optical disks; and CD ROM and DVD-ROM disks. The processor and the memory can be supplemented by, or incorporated in, special purpose logic circuitry.

The subject matter described herein can be implemented in a computing system that includes a back end component, e.g., as a data server, or that includes a middleware component, e.g., an application server, or that includes a front end component, e.g., a client computer having a graphical user interface or a web browser through which a user can interact with an implementation of the subject matter described in this specification, or a combination of one or more such back end, middleware, or front end components. The components of the system can be interconnected by any form or medium of digital data communication, e.g., a communication network. Examples of communication networks include a local area network ("LAN") and a wide area network ("WAN"), an inter-network (e.g., the Internet), and peer-to-peer networks (e.g., ad hoc peer-to-peer networks).

While operations are depicted in the drawings in a particular order, such operations are not required to be performed in the particular order shown or in sequential order, and all illustrated operations are not required to be performed. Actions described herein can be performed in a different order.

Having now described some illustrative implementations, it is apparent that the foregoing is illustrative and not limiting, having been presented by way of example. In particular, although many of the examples presented herein involve specific combinations of method acts or system elements, those acts and those elements can be combined in other ways to accomplish the same objectives. Acts, elements, and features discussed in connection with one implementation are not intended to be excluded from a similar role in other implementations or implementations.

The phraseology and terminology used herein is for the purpose of description and should not be regarded as limiting. The use of "including" "comprising" "having" "containing" "involving" "characterized by" "characterized in that" and variations thereof herein, is meant to encompass the items listed thereafter, equivalents thereof, and additional items, as well as alternate implementations consisting of the items listed thereafter exclusively. In one implementation, the systems and methods described herein consist of one, each combination of more than one, or all of the described elements, acts, or components.

Any references to implementations or elements or acts of the systems and methods herein referred to in the singular can also embrace implementations including a plurality of these elements, and any references in plural to any implementation or element or act herein can also embrace implementations including only a single element. References in the singular or plural form are not intended to limit the presently disclosed systems or methods, their components, acts, or elements to single or plural configurations. References to any act or element being based on any information, act or element can include implementations where the act or element is based at least in part on any information, act, or element.

Any implementation disclosed herein can be combined with any other implementation or embodiment, and references to "an implementation," "some implementations," "one implementation" or the like are not necessarily mutually exclusive and are intended to indicate that a particular feature, structure, or characteristic described in connection with the implementation can be included in at least one implementation or embodiment. Such terms as used herein are not necessarily all referring to the same implementation. Any implementation can be combined with any other implementation, inclusively or exclusively, in any manner consistent with the aspects and implementations disclosed herein.

References to "or" can be construed as inclusive so that any terms described using "or" can indicate any of a single, more than one, and all of the described terms. References to at least one of a conjunctive list of terms can be construed as an inclusive OR to indicate any of a single, more than one, and all of the described terms. For example, a reference to "at least one of 'A' and 'B'" can include only 'A,' only 'B,' as well as both 'A' and 'B.' Such references used in conjunction with "comprising" or other open terminology can include additional items.

Where technical features in the drawings, detailed description or any claim are followed by reference signs, the reference signs have been included to increase the intelligibility of the drawings, detailed description, and claims. Accordingly, neither the reference signs nor their absence have any limiting effect on the scope of any claim elements.

Modifications of described elements and acts such as substitutions, changes and omissions can be made in the design, operating conditions and arrangement of the disclosed elements and operations without departing from the scope of the present disclosure.

## Claims

1. A system comprising one or more memory devices storing instructions thereon that, when executed by one or more processors, cause the one or more processors to:
receive, via a user interface, a selection to indicate a request for a form for display;
retrieve the form responsive to receipt of the selection, the form having a first format, and the first format including a first set of fields for display;
detect, responsive to retrieval of the form, based on one or more characteristics of the form, that the form is associated with a second set of fields, wherein the second set of fields is absent from the first format;
transmit, responsive to detection of the association between the form and the second set of fields, an Application Programming Interface (API) call to retrieve metadata to identify the second set of fields for inclusion in the form;
modify, responsive to receipt of the metadata, the form to have a second format, wherein the second format includes the first set of fields and the second set of fields; and
display, responsive to modification of the form, the form modified to include the first set of fields and the second set of fields.

2. The system of claim 1, wherein the instructions cause the one or more processors to:
identify, based on the metadata, a placement for respective fields of the second set of fields within the form; and
modify, based on the placement for the respective fields of the second set of fields, the form to include the second set of fields within the form.

3. The system of claim 2, wherein:
a first field of the first set of fields includes a first placement within the form having the first format;
a second field of the first set of fields includes a second placement within the form having the second format; and
the placement of a third field of the second set of fields within the form is relative to at least one of the first field having the first placement or the second field having the second placement, and wherein the third field is placed within the form based on the placement for the third field.

4. The system of any preceding claim, wherein the instructions cause the one or more processors to:
determine, for the second set of fields, a respective placement within the form relative to one or more fields of the first set of fields, wherein the one or more fields of the first set of fields are placed within the form using the first format;
place, based on the respective placement within the form, the second set of fields within the form; and
adjust, within the form, placements of the first set of fields responsive to the placement of the second set of fields within the form.

5. The system of any preceding claim, wherein:
a first field of the first set of fields includes:
a first placement within the form using the first format; and
a second placement within the form using the second format;
the first placement within the form and the second placement within the form are different;
a second field of the first set of fields includes:
a third placement within the form using the first format; and
a fourth placement within the form using the second format; and
the third placement within the form and the fourth placement within the form are the same.

6. The system of any preceding claim, wherein:
an external system obtains information from a first source in a first format;
the external system obtains information from a second source in a second format; and
the information in the first format and the information in the second format is modified by the external system for inclusion in the metadata.

7. The system of any preceding claim, wherein the instructions cause the one or more processors to:
display a first version of the form, wherein the first version of the form includes information previously provided by a user;
display a second version of the form, wherein the second version of the form includes the first set of fields and the second set of fields to receive subsequent information from the user;
receive a plurality of entries including the subsequent information, the subsequent information corresponding to the first set of fields and the second set of fields;
determine, responsive to receipt of the plurality of entries, a plurality of differences between the information previously provided by the user and the subsequent information; and
update, responsive to the determination of the plurality of differences, the form to reflect the plurality of differences.

8. The system of any preceding claim, wherein the instructions cause the one or more processors to:
receive information corresponding to respective fields of the second set of fields, wherein the information corresponding to the respective fields of the second set of fields is received responsive to a user entering information into the respective fields of the second set of fields; and
transmit, via a first API message, the information corresponding to the respective fields of the second set of fields for inclusion in subsequent versions of the form; and optionally
wherein the instructions cause the one or more processors to:
associate the second set of fields with the information corresponding to the respective fields of the second set of fields;
wherein a first respective field of the respective fields of the second set of fields is linked, via a first association, to information corresponding to the first respective field of the second set of fields; and
wherein subsequent retrieval of the first respective field of the respective fields of the second set of fields, via a second API message, results in subsequent retrieval of the information based on the first association.

9. The system of any preceding claim, wherein the instructions cause the one or more processors to:
transmit, to an external system, a form identifier to identify the form;
receive, from the external system, responsive to transmitting the form identifier, a response indicative that the form is associated with the second set of fields; and
detect, responsive to receiving the response, that the form is associated with the second set of fields; and optionally
the external system includes a plurality of external systems; and
the response indicative that the form is associated with the second set of fields includes information to identify respective external systems of the plurality of external systems to retrieve the metadata to identify the second set of fields.

10. A method, comprising:
receiving, by one or more processing circuits, via a user interface, a selection to indicate a request for a form for display;
retrieving, by the one or more processing circuits, the form responsive to receipt of the selection, the form having a first format, and the first format including a first set of fields for display;
detecting, by the one or more processing circuits, responsive to retrieval of the form, based on one or more characteristics of the form, that the form is associated with a second set of fields, wherein the second set of fields is absent from the first format;
transmitting, by the one or more processing circuits, responsive to detection of the association between the form and the second set of fields, an Application Programming Interface (API) call to retrieve metadata to identify the second set of fields for inclusion in the form;
modifying, by the one or more processing circuits, responsive to receipt of the metadata, the form to have a second format, wherein the second format includes the first set of fields and the second set of fields; and
displaying, by the one or more processing circuits, responsive to modification of the form, the form modified to include the first set of fields and the second set of fields.

11. The method of claim 10, further comprising:
identifying, by the one or more processing circuits, based on the metadata, a placement for respective fields of the second set of fields within the form; and
modifying, by the one or more processing circuits, based on the placement for the respective fields of the second set of fields, the form to include the second set of fields within the form.

12. The method of claim 10 or 11, further comprising:
determining, by the one or more processing circuits, for the second set of fields, a respective placement within the form relative to one or more fields of the first set of fields, wherein the one or more fields of the first set of fields are placed within the form using the first format;
placing, by the one or more processing circuits, based on the respective placement within the form, the second set of fields within the form; and
adjusting, by the one or more processing circuits, within the form, placements of the first set of fields responsive to the placement of the second set of fields within the form; and/or
the method, wherein:
an external system obtains information from a first source in a first format;
the external system obtains information from a second source in a second format; and
the information in the first format and the information in the second format is modified by the external system for inclusion in the metadata.

13. The method of any of claims 10 to 12, further comprising:
displaying, by the one or more processing circuits, a first version of the form, wherein the first version of the form includes information previously provided by a user;
displaying, by the one or more processing circuits, a second version of the form, wherein the second version of the form includes the first set of fields and the second set of fields to receive subsequent information from the user;
receiving, by the one or more processing circuits, a plurality of entries including the subsequent information, the subsequent information corresponding to the first set of fields and the second set of fields;
determining, by the one or more processing circuits, responsive to receipt of the plurality of entries, a plurality of differences between the information previously provided by the user and the subsequent information; and
updating, by the one or more processing circuits, responsive to the determination of the plurality of differences, the form to reflect the plurality of differences.

14. The method of any of claims 10 to 13, further comprising:
receiving, by the one or more processing circuits, information corresponding to respective fields of the second set of fields, wherein the information corresponding to the respective fields of the second set of fields is received responsive to a user entering information into the respective fields of the second set of fields; and
transmitting, by the one or more processing circuits, via a first API message, the information corresponding to the respective fields of the second set of fields for inclusion in subsequent versions of the form.

15. A non-transitory computer readable medium including one or more instructions stored thereon and executable by a processor to carry out the method of any of claims 10 to 14.
